(19) Europäisches Patentamt
European Patent Office
Office européen des brevets

(11) **EP 4 564 119 A1**

(12) **EUROPEAN PATENT APPLICATION**
published in accordance with Art. 153(4) EPC

(43) Date of publication:
**04.06.2025 Bulletin 2025/23**

(51) International Patent Classification (IPC):
***G05D 1/40*** (2024.01)

(21) Application number: **23845034.0**

(22) Date of filing: **25.05.2023**

(86) International application number:
**PCT/CN2023/096369**

(87) International publication number:
**WO 2024/021820 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.07.2022 CN 202210875763**

(71) Applicant: **Ehang Intelligent Equipment (Guangzhou) Co., Ltd.**
**Guangzhou, Guangdong 510000 (CN)**

(72) Inventors:
• **HU, Huazhi**
  **Guangzhou, Guangdong 510000 (CN)**
• **CHENG, Zixiao**
  **Guangzhou, Guangdong 510000 (CN)**
• **SHI, Chuan**
  **Guangzhou, Guangdong 510000 (CN)**

(74) Representative: **Zaboliene, Reda**
**Metida**
**Business center Vertas**
**Gyneju str. 16**
**01109 Vilnius (LT)**

(54) **GROUND SLOPE MEASUREMENT METHOD AND DEVICE, AND COMPUTER-READABLE STORAGE MEDIUM**

(57) A ground slope detection method, device and computer-readable storage medium. The method includes: (S1) during landing of an aircraft, calculating a unique plane of at least three downward-looking distance detection points in a body coordinate system of the aircraft according to three-dimensional attitude data of the aircraft and distance data of at least three downward-looking rangefinders provided on the aircraft; (S2) calculating a rotation matrix of the body coordinate system to a geodetic coordinate system by the three-dimensional attitude data, and calculating a first unit normal vector of the unique plane in the geodetic coordinate system according to the rotation matrix; and (S3) calculating an included angle between a second unit normal vector of a geodetic horizontal plane in the geodetic coordinate system and the first unit normal vector, and generating a warning signal of excessive ground slope when the included angle is greater than or equal to a preset threshold. The method reduces the system hardware cost and maintenance and use difficulty of slope detection, providing effective protection for the safety of aircraft landing.

```
During landing of an aircraft, calculating a unique plane of at least
three downward-looking distance detection points in a body coordinate
system of the aircraft according to three-dimensional attitude data of
the aircraft and distance data of at least three downward-looking
rangefinders provided on the aircraft                          — S1
          │
          ▼
Calculating a rotation matrix of the body coordinate system to a
geodetic coordinate system by the three-dimensional attitude data, and
calculating a first unit normal vector of the unique plane in the geodetic
coordinate system according to the rotation matrix             — S2
          │
          ▼
Calculating an included angle between a second unit normal vector of a   — S3
geodetic horizontal plane in the geodetic coordinate system and the first
unit normal vector, and generating a warning signal of excessive
ground slope when the included angle is greater than or equal to a
preset threshold
```

FIG. 1

**EP 4 564 119 A1**

## Description

## Technical Field

The present disclosure relates to the field of unmanned aerial vehicle technology, and in particular to a ground slope detection method, device and computer-readable storage medium.

## Background Technology

At present, relevant conditions are set for the safe landing of aircraft in aircraft technology. For example, for the safe landing of multi-rotor aircraft, whether it is through fully autonomous control, semi-automatic control or manual control, the landing conditions are closely related to the slope and flatness of the ground to be landed. In particular, for some aircraft with a small vertical distance between the propeller plane and the landing skids, if the ground slope is large or there is a significant terrain height difference on the ground, when the aircraft falls vertically, there is a possibility of collision between the propeller and the ground, which will directly lead to damage to the propeller and even the risk of overturning the aircraft.

In order to avoid the above risks, the aircraft is controlled to land in a known field, that is, the terrain conditions of the landing site can be measured in advance or in real time by a ground equipment. However, in many scenarios, an aircraft needs to land or make an emergency landing at an unknown site. At this time, there is no ground equipment to detect, calculate, and analyze the terrain conditions of the landing site, which cannot provide effective guarantee for the safe landing of the aircraft.

In order to solve the above problems, an existing solution is to install a laser radar-based scanner and computing system on the aircraft to obtain accurate radar point cloud data under the aircraft, thereby forming terrain data and realizing terrain detection of the landing ground.

However, the system hardware supporting the above solution is costly, difficult to maintain and use, and due to the size and weight, it cannot be widely used on smaller-scale aircraft platforms such as drones.

In summary, how to detect the slope of the landing ground in a simple and effective way on the aircraft has become a technical problem that needs to be solved urgently.

## Summary of Invention

## Technical Issues

The present disclosure proposes a ground slope detection method, device and computer-readable storage medium to solve the slope detection issue when an aircraft performs landing or an emergency landing at an unknown site, thereby providing a guarantee for the safe landing of the aircraft.

## Technical Solution

The present disclosure proposes a ground slope detection method, which includes:

> calculating a unique plane of at least three downward-looking distance detection points in a body coordinate system of an aircraft according to three-dimensional attitude data of the aircraft and distance data of at least three downward-looking rangefinders provided on the aircraft during landing of the aircraft;
> calculating a rotation matrix of the body coordinate system to a geodetic coordinate system according to the three-dimensional attitude data, and calculating a first unit normal vector of the unique plane in the geodetic coordinate system according to the rotation matrix; and
> calculating an included angle between a second unit normal vector of a geodetic horizontal plane in the geodetic coordinate system and the first unit normal vector, and generating a warning signal of excessive ground slope when the included angle is greater than or equal to a preset threshold.

The present disclosure also proposes a ground slope detection device, which includes a memory, a processor, and a computer program stored in the memory and executable on the processor, wherein the computer program implements the steps of the ground slope detection method described in any one of the above when executed by the processor.

The present disclosure also proposes a computer-readable storage medium, wherein a ground slope detection program is stored on the computer-readable storage medium, wherein the ground slope detection program implements the steps of the ground slope detection method described in any one of the above when executed by the processor.

## Beneficial Effects

The ground slope detection method, device and computer-readable storage medium of the present disclosure are implemented by calculating the unique plane of at least three downward-looking distance detection points in the body coordinate system of the aircraft according to the three-dimensional attitude data of the aircraft and the distance data of at least three downward-looking rangefinders provided on the aircraft during the landing of the aircraft; calculating the rotation matrix of the body coordinate system to the geodetic coordinate system according to the three-dimensional attitude data, and calculating the first unit normal vector of the unique plane in the geodetic coordinate system according to the rotation matrix; and calculating the included angle between the second unit normal vector of the geodetic horizontal plane in the geodetic coordinate system and the first unit normal vector, and generating a warning signal of excessive ground slope when the included angle is greater than or equal to a preset threshold. The present disclosure realizes a simple and efficient slope detection solution, reduces the system hardware cost and maintenance and use difficulty, and when applied to smaller-scale aircraft platforms such as drones, it is no longer limited by volume size and self-weight, which effectively guarantees the landing safety of the aircraft.

**Description of the Drawings**

The present disclosure will be further described below in conjunction with the drawings and embodiments, in which:

FIG. 1 is a flow chart of the first embodiment of the ground slope detection method of the present disclosure;
FIG. 2 is a first flow chart of the second embodiment of the ground slope detection method of the present disclosure;
FIG. 3 is a second flow chart of the second embodiment of the ground slope detection method of the present disclosure;
FIG. 4 is a third flow chart of the second embodiment of the ground slope detection method of the present disclosure;
FIG. 5 is a first flow chart of the third embodiment of the ground slope detection method of the present disclosure;
FIG. 6 is a second flow chart of the third embodiment of the ground slope detection method of the present disclosure;
FIG. 7 is a third flow chart of the third embodiment of the ground slope detection method of the present disclosure;
FIG. 8 is a fourth flow chart of the third embodiment of the ground slope detection method of the present disclosure; and
FIG. 9 is a schematic diagram of slope angle detection of the third embodiment of the ground slope detection method of the present disclosure.

**Implementation Methods of Invention**

It should be understood that the specific embodiments described herein are only used to explain the present disclosure and are not used to limit the present disclosure.
In the subsequent description, the use of suffixes such as "module", "component" or "unit" used to represent elements is only to facilitate the description of the present disclosure and has no specific meaning in itself. Therefore, "module", "component" or "unit" can be used interchangeably.

Embodiment 1

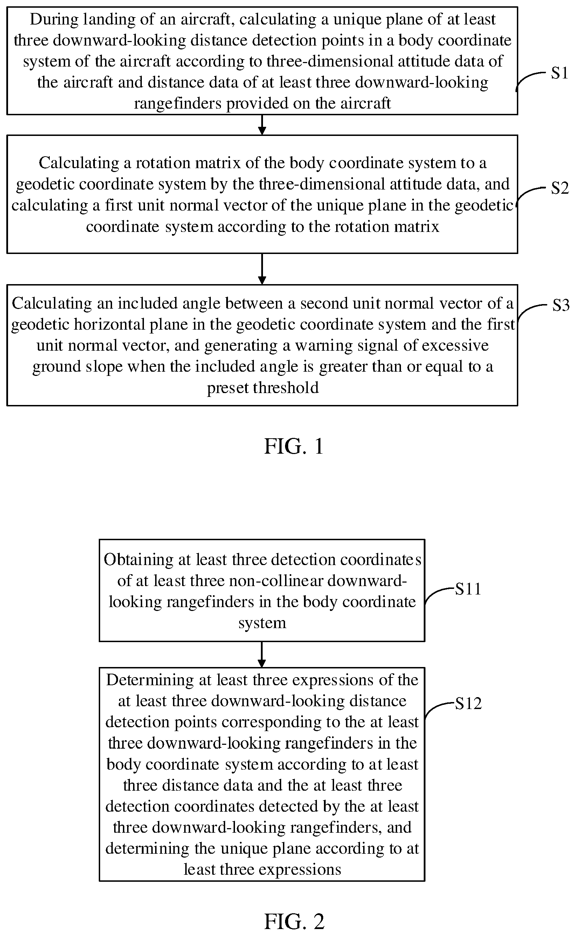

FIG. 1 is a flow chart of the first embodiment of the ground slope detection method of the present disclosure. A ground slope detection method includes:
S1. During landing of an aircraft, calculating a unique plane of at least three downward-looking distance detection points in the body coordinate system of the aircraft according to the three-dimensional attitude data of the aircraft and the distance data of at least three downward-looking rangefinders provided on the aircraft.
In this embodiment, when the aircraft is preparing to land, the relative distance between the aircraft and the landing area is determined according to the distance data of at least one downward-looking rangefinder, and when the relative distance is less than the preset distance value, the unique plane of at least three downward-looking distance detection points in the body coordinate system is calculated, that is, the slope angle of the landing area is calculated.
In this embodiment, during the vertical landing of the aircraft, if it is detected that the above relative distance is less than the preset distance value, the calculation of the unique plane of at least three downward-looking distance detection points in the body coordinate system begins; during the landing of the aircraft, if the aircraft moves horizontally relative to the ground, the above relative distance is updated after the horizontal movement, and when the above relative distance is less than the preset distance value, the unique plane of at least three downward-looking distance detection points in the body coordinate system is recalculated.
In this embodiment, at least three downward-looking rangefinders provided on the aircraft are millimeter wave radars, ultrasonic radars or laser radars, wherein each downward-looking rangefinder uses the same type of device.
In this embodiment, at least three downward-looking rangefinders are respectively provided at the bottom of the aircraft and at dispersed positions where the detection direction is not blocked. Optionally, at least three downward-looking rangefinders are respectively installed at the end points of the aircraft's landing skids.
S2. Calculating a rotation matrix of the body coordinate system to the geodetic coordinate system by the three-dimensional attitude data, and calculating the first unit normal vector of the unique plane in the geodetic coordinate system according to the rotation matrix.
In this embodiment, first, the three-dimensional attitude data of the aircraft is obtained by the inertial measurement unit of the aircraft, and the three-dimensional attitude data includes pitch, yaw and roll; then, the rotation matrix $R_b^i$ from the body coordinate system to the geodetic coordinate system is calculated according to the three-dimensional attitude data; finally, the first unit

normal vector $\mathrm{I}^{\mathrm{i}}_{\mathrm{abc}} = R^{i}_{b} * \mathrm{I}^{\mathrm{b}}_{\mathrm{abc}}$ of the unit normal

vector $\mathrm{I}^{\mathrm{b}}_{\mathrm{abc}}$ of the unique plane in the geodetic coordinate system is calculated according to the rotation matrix.

S3. Calculating the included angle between the second unit normal vector of the geodetic horizontal plane in the geodetic coordinate system and the first unit normal vector, and generating a warning signal of excessive ground slope when the included angle is greater than or equal to a preset threshold.

In this embodiment, first, the unit normal vector $\mathrm{I}^{\mathrm{i}}_{\mathrm{G}}(0; 0; -1)$ of the geodetic horizontal plane in the geodetic coordinate system is obtained as the second unit normal vector of this embodiment; then, the included angle θ between the first unit normal vector $\mathrm{I}^{\mathrm{i}}_{\mathrm{abc}}$ and

the second unit normal vector $\mathrm{I}^{\mathrm{i}}_{\mathrm{G}}$ is obtained by vector inner product formula and arccosine calculation, which is also the slope angle between the above-mentioned unique plane and the geodetic horizontal plane. In this embodiment, when the included angle is greater than or equal to the preset threshold, it is determined that the slope of the landing area is large, that is, a warning signal of excessive ground slope is generated.

The beneficial effects of this embodiment are that, during the landing of the aircraft, a unique plane of at least three downward-looking distance detection points in the body coordinate system of the aircraft is calculated according to the three-dimensional attitude data of the aircraft and the distance data of at least three downward-looking rangefinders provided on the aircraft; the rotation matrix of the body coordinate system to the geodetic coordinate system is calculated according to the three-dimensional attitude data, and the first unit normal vector of the unique plane in the geodetic coordinate system is calculated according to the rotation matrix; and the included angle between the second unit normal vector of the geodetic horizontal plane in the geodetic coordinate system and the first unit normal vector is calculated, and when the included angle is greater than or equal to a preset threshold, a warning signal of excessive ground slope is generated.

This embodiment implements a simple and efficient slope detection solution, reduces the system hardware cost and the difficulty of maintenance and use, and when applied to smaller-scale aircraft platforms such as drones, it is no longer limited by volume size and self-weight, which effectively guarantees the landing safety of the aircraft.

Embodiment 2

FIG. 2 is the first flow chart of the second embodiment of the ground slope detection method of the present disclosure. Based on the above embodiment, during the landing of the aircraft, the unique plane of at least three downward-looking distance detection points in the body coordinate system of the aircraft is calculated according to the three-dimensional attitude data of the aircraft and the distance data of at least three downward-looking rangefinders provided on the aircraft, including: S11, obtaining at least three detection coordinates of at least three non-collinear downward-looking rangefinders in the body coordinate system.

In this embodiment, first, define the forward, right and downward body coordinate system $O^{b}_{xyz}$ and the north, east and ground geodetic coordinate

system $O^{i}_{xyz}$; then, store the known coordinates

$P^{b}_{1\sim n}$ of each downward-looking rangefinder in the body coordinate system into the flight control computer program (i.e., flight control for short).

S12. Determining at least three expressions of at least three downward-looking distance detection points corresponding to at least three downward-looking rangefinders in the body coordinate system according to at least three distance data and at least three detection coordinates detected by at least three downward-looking rangefinders, and determining the unique plane according to at least three expressions.

In this embodiment, first, the flight control obtains the real-time three-dimensional attitude data of the aircraft and the distance $L^{b}_{1\sim n}$ of each downward-

looking rangefinder; then, the coordinates $P^{b}_{a}$,

$P^{b}_{b}, P^{b}_{c}$ of any three non-collinear downward-looking rangefinders in the body coordinate system are obtained, and the detection distances $L^{b}_{a}, L^{b}_{b}, L^{b}_{c}$ of the above three non-collinear downward-looking rangefinders are combined to calculate the expressions $T^{b}_{a}, T^{b}_{b}, T^{b}_{c}$ of the above three non-collinear detection points in the body coordinate system; finally, on the premise of confirming that the above three detection points are not collinear, the unique plane $S_{abc}$ in the body coordinate system is determined.

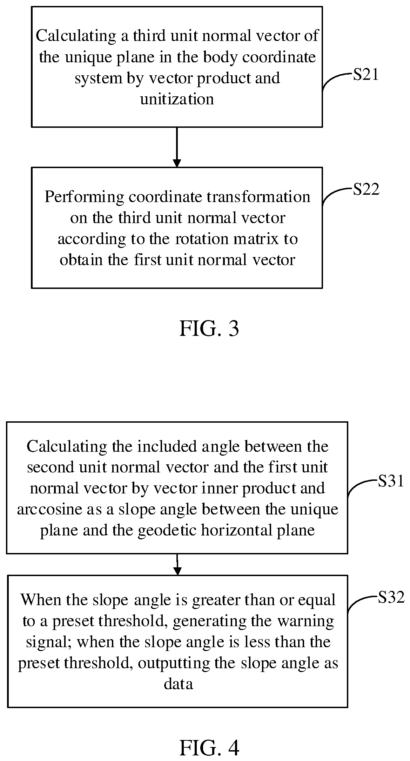

FIG. 3 is a second flow chart of the second embodiment of the ground slope detection method of the present disclosure. In this embodiment, the rotation matrix of the body coordinate system to the geodetic coordinate system is calculated by the three-dimensional attitude data, and the first unit normal vector of the unique plane in the geodetic coordinate system is calculated according to the rotation matrix, including:

S21. calculating the third unit normal vector of the unique plane in the body coordinate system by vector product and unitization.

In this embodiment, first, the unit normal vector $\mathrm{I}_{abc}^{b}$ is used to represent the unique plane $S_{abc}$; then, the unit normal vector $\mathrm{I}_{abc}^{b} = \left| \overrightarrow{T_a^b T_b^b} \times \overrightarrow{T_a^b T_c^b} \right|$ is calculated by vector product and unitization, as the third unit normal vector of this embodiment.

S22. Performing coordinate transformation on the third unit normal vector according to the rotation matrix to obtain the first unit normal vector.

In this embodiment, first, the rotation matrix $R_b^i$ from the body coordinate system to the geodetic coordinate system is calculated according to the three-dimensional attitude data; then, the unit normal vector $\mathrm{I}_{abc}^{i} = R_b^i * \mathrm{I}_{abc}^{b}$ of the unique plane $S_{abc}$ in the geodetic coordinate system can be obtained by coordinate transformation, as the first unit normal vector of this embodiment.

FIG. 4 is a third flow chart of the second embodiment of the ground slope detection method of the present disclosure. In this embodiment, the included angle between the second unit normal vector of the geodetic horizontal plane in the geodetic coordinate system and the first unit normal vector is calculated, and when the included angle is greater than or equal to a preset threshold, a warning signal of excessive ground slope is generated, including:

S31. calculating the included angle between the second unit normal vector and the first unit normal vector by vector inner product and arccosine as the slope angle between the unique plane and the geodetic horizontal plane.

In this embodiment, the unit normal vector of the geodetic horizontal plane in the geodetic coordinate system is a known quantity, namely, the second unit normal vector $\mathrm{I}_G^i(0; 0; -1)$; in this embodiment, the included angle θ between the first unit normal vector $\mathrm{I}_{abc}^{i}$ and the second unit normal vector $\mathrm{I}_G^i$ is obtained by vector inner product formula and arccosine calculation, and the included angle is also the slope angle between the unique plane and the geodetic horizontal plane.

S32. When the slope angle is greater than or equal to the preset threshold, the warning signal is generated; when the slope angle is less than the preset threshold, the slope angle is output as data. In this embodiment, when the slope angle is greater than or equal to the preset threshold, the warning signal is generated; if the corresponding current landing area changes during the landing, the slope angle is updated at a preset frequency, thereby assisting the pilot or the ground station to select a flat landing area for the aircraft; if the slope angle is less than the preset threshold during the landing, the slope angle is output as data, thereby assisting the pilot or the ground station to perform landing control on the aircraft in the current landing area.

Embodiment 3

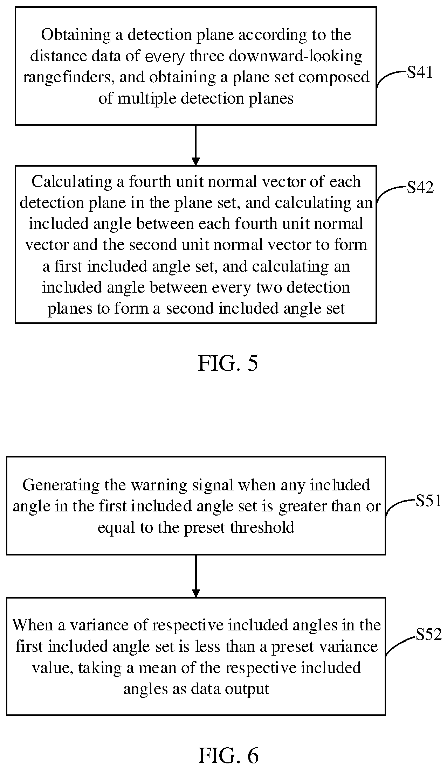

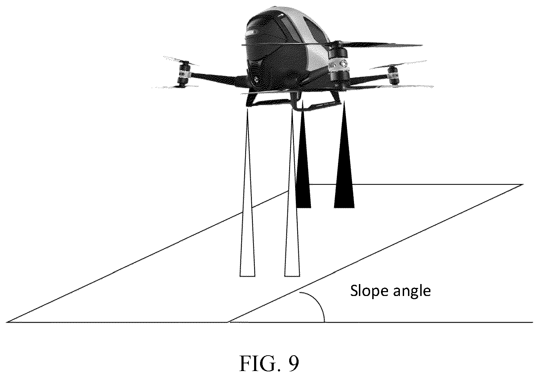

FIG. 5 is a first flow chart of the third embodiment of the ground slope detection method of the present disclosure, and FIG. 9 is a schematic diagram of slope angle detection of the third embodiment of the ground slope detection method of the present disclosure. In this embodiment, the number of the downward-looking rangefinders is greater than three, and the method includes:

S41. obtaining a detection plane according to the distance data of every three downward-looking rangefinders, and obtaining a plane set composed of multiple detection planes.

In this embodiment, as shown in FIG. 9, each downward-looking rangefinder is respectively set at the four end points of the two landing skids of the aircraft, according to which any three of the four downward-looking rangefinders are not collinear. In this embodiment, any three of the four downward-looking rangefinders obtains a unique plane, and thus, the plane set composed includes four detection planes.

S42. Calculating the fourth unit normal vector of each detection plane in the plane set, and calculating the included angle between each fourth unit normal vector and the second unit normal vector to form a first included angle set, and calculating the included angle between every two detection planes to form a second included angle set.

In this embodiment, in the plane set, the fourth unit normal vectors of the four detection planes are calculated respectively, and the included angles between the four fourth unit normal vectors and the second unit normal vector are calculated respectively, to obtain a first included angle set consisting of four included angles.

In this embodiment, in the plane set, the fourth unit normal vectors of the four detection planes are calculated respectively, and the included angle between every two fourth unit normal vectors in the four fourth unit normal vectors is calculated to obtain a second included angle set consisting of six included angles.

FIG. 6 is a second flow chart of the third embodiment of the ground slope detection method of the present disclosure. In this embodiment, the method further includes:

S51. When any included angle in the first included angle set is greater than or equal to the preset threshold, the warning signal is generated.

In this embodiment, among the four included angles in the first included angle set, if any included angle is greater than or equal to the preset threshold, it is determined that there is a large slope, that is, the warning signal is generated.

S52. When the variance of respective included angles in the first included angle set is less than the preset variance value, the mean of the respective included angles is taken as data output.

In this embodiment, among the four included angles in the first included angle set, if any included angle is greater than or equal to the preset threshold, it is determined that there is a large slope, that is, the warning signal is generated; at the same time, among the four included angles in the first included angle set, the difference between each included angle is not large, that is, when the variance of each included angle is less than the preset variance value, the mean of each included angle is taken as the data output corresponding to the warning signal.

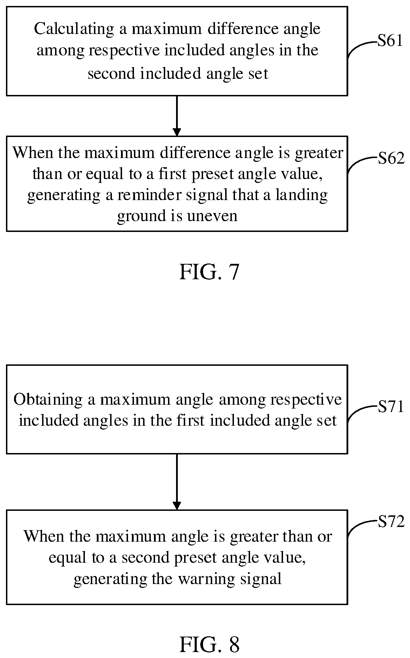

FIG. 7 is a third flow chart of the third embodiment of the ground slope detection method of the present disclosure. In this embodiment, the method further includes:
S61. Calculating the maximum difference angle among respective included angles in the second included angle set.

In this embodiment, the difference between every two included angles in the second included angle set is taken, and the two included angles with the largest difference are taken as the maximum difference angles of this embodiment; or, the average of the six included angles in the second included angle set is taken, and among the six included angles, the included angle with the maximum difference from the average is taken as the maximum difference angle of this embodiment.

S62. When the maximum difference angle is greater than or equal to the first preset angle value, generating a reminder signal that the landing ground is uneven.

In this embodiment, when the maximum difference angle is greater than or equal to the first preset angle value, it is determined that the angle difference between the four planes is excessively large, that is, it is determined that the current landing area is in an uneven state.

FIG. 8 is a fourth flow chart of the third embodiment of the ground slope detection method of the present disclosure. In this embodiment, the method further includes:
S71. Obtaining the maximum angle among respective included angles in the first included angle set.

In this embodiment, among the four included angles in the first included angle set, the included angle with the largest angle value is obtained as the maximum angle of this embodiment.

S72. When the maximum angle is greater than or equal to the second preset angle value, the warning signal is generated.

In this embodiment, when the maximum angle is greater than or equal to the second preset angle value, the warning signal is generated, wherein the second preset angle value is greater than the first preset angle value. That is, the first preset angle value is only used to indicate the uneven state of the ground, and this uneven state does not necessarily bring safety hazards to the landing of the aircraft; while the second preset angle value is used to indicate the slope state of the ground, and this slope state will definitely affect the safety of the landing of the aircraft.

Embodiment 4

Based on the above embodiments, the present disclosure also proposes a ground slope detection device, which includes a memory, a processor, and a computer program stored in the memory and executable on the processor. When the computer program is executed by the processor, the steps of the ground slope detection method described in any one of the above are implemented.

It should be noted that the above device embodiment and the method embodiment belong to the same concept. The specific implementation process is detailed in the method embodiment, and the technical features in the method embodiment are applicable to the device embodiment, which will not be repeated here.

Embodiment 5

Based on the above embodiments, the present disclosure also proposes a computer-readable storage medium, on which a ground slope detection program is stored. When the ground slope detection program is executed by a processor, the steps of the ground slope detection method described in any of the above are implemented.

It should be noted that the above medium embodiment and the method embodiment belong to the same concept, and the specific implementation process is detailed in the method embodiment, and the technical features in the method embodiment are applicable to the medium embodiment, which will not be repeated here.

It should be noted that in this disclosure, the terms "include", "comprise" or any other variants thereof are intended to cover non-exclusive inclusion, so that a process, method, article or device including a series of elements includes not only those elements, but also other elements not explicitly listed, or also includes elements inherent to such a process, method, article or device. In the absence of further restrictions, an element defined by the sentence "include a..." does not exclude the existence of other identical elements in the process, method, article or device including the element.

The serial numbers of the above embodiments of the present disclosure are only for description and do not represent the advantages and disadvantages of the embodiments.

Through the description of the above implementation methods, those skilled in the art can clearly understand that the above implementation methods can be implemented by means of software plus the necessary general hardware platform, or by hardware, but in many cases the former is a better implementation method. Based on this understanding, the technical solution of the present disclosure in essence, that is, the part that contributes to the prior art, can be embodied in the form of a software product, which is stored in a storage medium (such as ROM/RAM, disk, CD), including several instructions for a terminal (which can be a mobile phone, computer, server, air conditioner, or network equipment, etc.) to execute the methods described in each embodiment of the present disclosure.

The above describes the embodiments of the present disclosure in conjunction with the accompanying drawings, but the present disclosure is not limited to the above specific implementation methods. The above specific implementation methods are only illustrative and not restrictive. Under the teaching of the present disclosure, ordinary skills in the art can also make many forms without departing from the scope of protection of the present disclosure and the claims, which are all within the protection of the present disclosure.

Industrial Applicability

The ground slope detection method, device and computer-readable storage medium provided by the embodiment of the present disclosure are as follows: during the landing of the aircraft, according to the three-dimensional attitude data of the aircraft and the distance data of at least three downward-looking rangefinders provided on the aircraft, a unique plane of at least three downward-looking distance detection points in the body coordinate system of the aircraft is calculated; the rotation matrix of the body coordinate system to the geodetic coordinate system is calculated by the three-dimensional attitude data, and the first unit normal vector of the unique plane in the geodetic coordinate system is calculated according to the rotation matrix; the included angle between the second unit normal vector of the geodetic horizontal plane in the geodetic coordinate system and the first unit normal vector is calculated, and when the included angle is greater than or equal to a preset threshold, a warning signal of excessive ground slope is generated. Thus, a simple and efficient slope detection solution is realized, the system hardware cost and the difficulty of maintenance and use are reduced, and when applied to smaller-scale aircraft platforms such as drones, it is no longer limited by volume size and self-weight, providing effective protection for the landing safety of the aircraft. Therefore, it has industrial applicability.

**Claims**

1. A ground slope detection method, comprising:

    during landing of an aircraft, calculating a unique plane of at least three downward-looking distance detection points in a body coordinate system of the aircraft according to three-dimensional attitude data of the aircraft and distance data of at least three downward-looking rangefinders provided on the aircraft;
    calculating a rotation matrix of the body coordinate system to a geodetic coordinate system by the three-dimensional attitude data, and calculating a first unit normal vector of the unique plane in the geodetic coordinate system according to the rotation matrix; and
    calculating an included angle between a second unit normal vector of a geodetic horizontal plane in the geodetic coordinate system and the first unit normal vector, and generating a warning signal of excessive ground slope when the included angle is greater than or equal to a preset threshold.

2. The ground slope detection method according to claim 1, wherein during the landing of the aircraft, calculating the unique plane of the at least three downward-looking distance detection points in the body coordinate system of the aircraft according to the three-dimensional attitude data of the aircraft and the distance data of the at least three downward-looking rangefinders provided on the aircraft, comprises:

    obtaining at least three detection coordinates of at least three non-collinear downward-looking rangefinders in the body coordinate system; and
    determining at least three expressions of the at least three downward-looking distance detection points corresponding to the at least three downward-looking rangefinders in the body coordinate system according to at least three distance data and the at least three detection coordinates detected by the at least three downward-looking rangefinders, and determining the unique plane according to at least three expressions.

3. The ground slope detection method according to claim 1, wherein calculating the rotation matrix of the body coordinate system to the geodetic coordinate system by the three-dimensional attitude data, and calculating the first unit normal vector of the unique plane in the geodetic coordinate system according to the rotation matrix, comprises:

    calculating a third unit normal vector of the unique plane in the body coordinate system by vector product and unitization; and
    performing coordinate transformation on the third unit normal vector according to the rotation matrix to obtain the first unit normal vector.

4.  The ground slope detection method according to claim 1, wherein calculating the included angle between the second unit normal vector of the geodetic horizontal plane in the geodetic coordinate system and the first unit normal vector, and generating the warning signal of excessive ground slope when the included angle is greater than or equal to the preset threshold, comprises:

    calculating the included angle between the second unit normal vector and the first unit normal vector by vector inner product and arccosine as a slope angle between the unique plane and the geodetic horizontal plane; and
    when the slope angle is greater than or equal to a preset threshold, generating the warning signal; when the slope angle is less than the preset threshold, outputting the slope angle as data.

5.  The ground slope detection method according to claim 1, wherein the number of the downward-looking rangefinders is greater than three, and the method further comprises:

    obtaining a detection plane according to the distance data of every three downward-looking rangefinders, and obtaining a plane set composed of multiple detection planes; and
    calculating a fourth unit normal vector of each detection plane in the plane set, and calculating an included angle between each fourth unit normal vector and the second unit normal vector to form a first included angle set, and calculating an included angle between every two detection planes to form a second included angle set.

6.  The ground slope detection method according to claim 5, further comprising:

    generating the warning signal when any included angle in the first included angle set is greater than or equal to the preset threshold; and
    when a variance of respective included angles in the first included angle set is less than a preset variance value, taking a mean of the respective included angles as data output.

7.  The ground slope detection method according to claim 5, further comprising:

    calculating a maximum difference angle among respective included angles in the second included angle set; and
    when the maximum difference angle is greater than or equal to a first preset angle value, generating a reminder signal that a landing ground is uneven.

8.  The ground slope detection method according to claim 5, further including:

    obtaining a maximum angle among respective included angles in the first included angle set; and
    when the maximum angle is greater than or equal to a second preset angle value, generating the warning signal.

9.  A ground slope detection device, comprising a memory, a processor, and a computer program stored on the memory and executable on the processor, wherein the computer program, when executed by the processor, implements steps of the ground slope detection method according to any one of claims 1 to 8.

10. A computer-readable storage medium on which a ground slope detection program is stored, wherein the ground slope detection program, when executed by a processor, implements steps of the ground slope detection method according to any one of claims 1 to 8.

During landing of an aircraft, calculating a unique plane of at least three downward-looking distance detection points in a body coordinate system of the aircraft according to three-dimensional attitude data of the aircraft and distance data of at least three downward-looking rangefinders provided on the aircraft

S1

Calculating a rotation matrix of the body coordinate system to a geodetic coordinate system by the three-dimensional attitude data, and calculating a first unit normal vector of the unique plane in the geodetic coordinate system according to the rotation matrix

S2

Calculating an included angle between a second unit normal vector of a geodetic horizontal plane in the geodetic coordinate system and the first unit normal vector, and generating a warning signal of excessive ground slope when the included angle is greater than or equal to a preset threshold

S3

FIG. 1

Obtaining at least three detection coordinates of at least three non-collinear downward-looking rangefinders in the body coordinate system

S11

Determining at least three expressions of the at least three downward-looking distance detection points corresponding to the at least three downward-looking rangefinders in the body coordinate system according to at least three distance data and the at least three detection coordinates detected by the at least three downward-looking rangefinders, and determining the unique plane according to at least three expressions

S12

FIG. 2

Calculating a third unit normal vector of the unique plane in the body coordinate system by vector product and unitization ⌐S21

Performing coordinate transformation on the third unit normal vector according to the rotation matrix to obtain the first unit normal vector ⌐S22

FIG. 3

Calculating the included angle between the second unit normal vector and the first unit normal vector by vector inner product and arccosine as a slope angle between the unique plane and the geodetic horizontal plane ⌐S31

When the slope angle is greater than or equal to a preset threshold, generating the warning signal; when the slope angle is less than the preset threshold, outputting the slope angle as data ⌐S32

FIG. 4

Obtaining a detection plane according to the distance data of every three downward-looking rangefinders, and obtaining a plane set composed of multiple detection planes ⎯S41

Calculating a fourth unit normal vector of each detection plane in the plane set, and calculating an included angle between each fourth unit normal vector and the second unit normal vector to form a first included angle set, and calculating an included angle between every two detection planes to form a second included angle set ⎯S42

FIG. 5

Generating the warning signal when any included angle in the first included angle set is greater than or equal to the preset threshold ⎯S51

When a variance of respective included angles in the first included angle set is less than a preset variance value, taking a mean of the respective included angles as data output ⎯S52

FIG. 6

Calculating a maximum difference angle among respective included angles in the second included angle set — S61

When the maximum difference angle is greater than or equal to a first preset angle value, generating a reminder signal that a landing ground is uneven — S62

FIG. 7

Obtaining a maximum angle among respective included angles in the first included angle set — S71

When the maximum angle is greater than or equal to a second preset angle value, generating the warning signal — S72

FIG. 8

Slope angle

FIG. 9

## INTERNATIONAL SEARCH REPORT

| International application No. |
| --- |
| **PCT/CN2023/096369** |

| A. | CLASSIFICATION OF SUBJECT MATTER |
| --- | --- |

G05D 1/10(2006.01)i

According to International Patent Classification (IPC) or to both national classification and IPC

| B. | FIELDS SEARCHED |
| --- | --- |

Minimum documentation searched (classification system followed by classification symbols)

IPC: G05D 1

Documentation searched other than minimum documentation to the extent that such documents are included in the fields searched

Electronic data base consulted during the international search (name of data base and, where practicable, search terms used)

CNTXT; CNABS; ENTXTC; VEN: 无人机, 飞行器, 法线, 法向, 降落, 着陆, 距离, 测距, 平面, 坡, 斜, UAV, aircraft, unmanned, aerial, vehicle, fly, normal, line, vector, drop+, landing, distan+, plane, ramp, slope

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115167512 A (EHANG INTELLIGENT EQUIPMENT (GUANGZHOU) CO., LTD.) 11 October 2022 (2022-10-11)<br>claims 1-10 | 1-10 |
| Y | KR 20170120500 A (FOUND OF SOONGSIL UNIVERSITY-INDUSTRY COOP.) 31 October 2017 (2017-10-31)<br>description, paragraphs 29-125, and figures 1-17 | 1-10 |
| Y | CN 110222612 A (BEIJING JIAOTONG UNIVERSITY) 10 September 2019 (2019-09-10)<br>description, paragraphs 78-83, and figure 5 | 1-10 |
| A | CN 105953773 A (NANJING UNIVERSITY OF AERONAUTICS AND ASTRONAUTICS) 21 September 2016 (2016-09-21)<br>entire document | 1-10 |
| A | CN 104843192 A (BOEING CO.) 19 August 2015 (2015-08-19)<br>entire document | 1-10 |
| A | CN 107505625 A (BENEWAKE CO., LTD.) 22 December 2017 (2017-12-22)<br>entire document | 1-10 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 September 2023** | **12 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/096369** |

| C. | DOCUMENTS CONSIDERED TO BE RELEVANT | |
|---|---|---|
| Category* | Citation of document, with indication, where appropriate, of the relevant passages | Relevant to claim No. |
| A | CN 110832274 A (SZ DJI TECHNOLOGY CO., LTD.) 21 February 2020 (2020-02-21)<br>entire document | 1-10 |

Form PCT/ISA/210 (second sheet) (July 2022)

## INTERNATIONAL SEARCH REPORT
### Information on patent family members

International application No.

**PCT/CN2023/096369**

| Patent document cited in search report | | | Publication date (day/month/year) | Patent family member(s) | | | Publication date (day/month/year) |
|---|---|---|---|---|---|---|---|
| CN | 115167512 | A | 11 October 2022 | None | | | |
| KR | 20170120500 | A | 31 October 2017 | KR | 101891561 | B1 | 27 August 2018 |
| CN | 110222612 | A | 10 September 2019 | None | | | |
| CN | 105953773 | A | 21 September 2016 | None | | | |
| CN | 104843192 | A | 19 August 2015 | EP | 2908303 | A1 | 19 August 2015 |
| | | | | EP | 2908303 | B1 | 05 April 2017 |
| | | | | US | 2015235560 | A1 | 20 August 2015 |
| | | | | US | 9734726 | B2 | 15 August 2017 |
| | | | | CA | 2870979 | A1 | 17 August 2015 |
| | | | | CA | 2870979 | C | 12 February 2019 |
| | | | | ES | 2632259 | T3 | 12 September 2017 |
| CN | 107505625 | A | 22 December 2017 | None | | | |
| CN | 110832274 | A | 21 February 2020 | WO | 2020103029 | A1 | 28 May 2020 |

Form PCT/ISA/210 (patent family annex) (July 2022)